# EUROPÄISCHE PATENTSCHRIFT

(11) **EP 1 014 734 B1**
(45) Veröffentlichungstag und Bekanntmachung des Hinweises auf die Patenterteilung: **16.03.2005**
(21) Anmeldenummer: 99123977.3
(22) Anmeldetag: 03.12.1999
(51) Int. Cl.: H04Q 3/00, H04M 3/22

(54) **Verfahren zum Abhören eines Teilnehmers eines Intelligenten Netzes**
Method for monitoring a subscriber in an intelligent network
Procédé d'écoutes légales d'un abonné dans un réseau intelligent

(30) Priorität: 03.12.1998 DE 19855920
(43) Veröffentlichungstag der Anmeldung: 28.06.2000
(73) Patentinhaber: SIEMENS AKTIENGESELLSCHAFT, 80333 München (DE)
(72) Erfinder: Gundlach, Michael Dr., 81739 München (DE)

(56) Entgegenhaltungen:
- WO-A-97/41678
- WO-A-99/13655

## Beschreibung

Die Erfindung betrifft ein Verfahren zum Abhören einer Kommunikationsverbindung, insbesondere eines Telefongesprächs, zwischen zwei Kommunikationsteilnehmern, von denen mindestens einer ein zu überwachender Teilnehmer ist, wobei das Identifikationskennzeichen (z. B. die IN-Nummer oder die 'Personal User Identity') des bzw. eines zu überwachenden Teilnehmers oder der zu überwachenden Teilnehmer gekennzeichnet wird, und diese Kennzeichnung eine Angabe darüber enthält, welcher dritte bzw. welche dritten Kommunikationsteilnehmer zum Abhören einer Kommunikationsverbindung mit diesem zu überwachenden Teilnehmer berechtigt sein soll bzw. sollen. Wird ein zu überwachender Teilnehmer angerufen oder ruft er einen zweiten Kommunikationsteilnehmer an, wird eine Konferenzschaltung des zu überwachenden Teilnehmers und des anrufenden bzw. angerufenen zweiten Kommunikationsteilnehmers mit einem zum Abhören berechtigten Kommunikationsteilnehmer aufgebaut.

Nationale und internationale Gesetze verlangen von Betreibern eines öffentlichen und in Zukunft voraussichtlich auch eines privaten Netzes, den sogenannten Bedarfsträgern (Kriminalpolizei, Geheimdienst, etc.), unter Beachtung gewisser gesetzlicher Vorschriften zum Schutz der Kommunikationsteilnehmer (z. B. richterliche Genehmigung), den Fernmeldeverkehr verdächtiger Personen zu überwachen. Während dies bei klassischen Telefondiensten im Festnetz in der lokalen Vermittlungsstelle des zu überwachenden Teilnehmers durch Kennzeichnung des entsprechenden Teilnehmerdatensatzes und Einrichtung einer Art Konferenzschaltung zum Bedarfsträger relativ einfach möglich ist, besteht bei Intelligenten Netzen (IN) eine prinzipielle Schwierigkeit. Diese ergibt sich aus der Funktionsaufteilung von Signalisierung und Sprechverkehr auf verschiedene Netzkomponenten. Bei IN-Calls ist im allgemeinen vorab nicht festgelegt, über welche Vermittlungsstellen (VSt) Gespräche eines zu überwachenden Teilnehmers laufen. Ferner stehen nicht alle zur Überwachung erforderlichen Daten (u.a. IN-Nummern und Festnetz-Rufnummern der Kommunikationspartner) am selben Ort zur Verfügung.

In WO 97/41678 wird bereits ein Verfahren zum Abhören einer Kommunikationsverbindung angegeben, welches für Kommunikationsdienste mit IN-Diensten geeignet ist. Allerdings kann es geschehen, daß für jede Abhöraktion auf der INAP-Schnittstelle zwischen dem Service Control Point (SCP) und der Vermittlungsstelle große Datenmengen übertragen werden müssen.

Aufgabe der Erfindung ist es, ein verbessertes Verfahren zum Abhören einer Kommunikationsverbindung anzugeben.

Diese Aufgabe wird mittels des in Patentanspruch 1 definierten Verfahrens gelöst.

Dabei wird wie folgt vorgegangen:
(a) Das Identifizierungskennzeichen (z. B. die IN-Nummer oder die "Personal User Identity") des zu überwachenden Teilnehmers wird im Service Control Point (SCP) gekennzeichnet. Diese Kennzeichnung enthält unter anderem eine Angabe darüber, welche Bedarfsträger eine Abhörmöglichkeit erhalten.
(b) In einer Erweiterung des IN-spezifischen Protokolls (INAP) zwischen dem SCP und dem Service Switching Point (SSP) (in der Regel in der Transit-Vermittlungsstelle (TE) des anrufenden Teilnehmers) wird der SSP informiert, daß ein Telefonat zu überwachen ist. Dabei werden aber nicht alle für die Überwachung notwendigen Zusatzinformationen, wie
   - Beginn und Ende der Überwachungsmaßnahme,
   - Bezeichnung der Adressen der überwachenden Bedarfsträger
   - Auftragsnummer...
   übermittelt, sondern nur ein eindeutiges Identifizierungskennzeichen.
(c) Ist der Vermittlungsstelle, in der der SSP liegt, dieses Identifizierungskennzeichen (zum Beispiel aus einer früheren Überwachung) bereits bekannt, so sind alle weiteren notwendigen Zusatzinformationen gespeichert, und es wird eine Konferenzschaltung zum Bedarfsträger aufgebaut. Diesem werden die Verbindungsdaten (Festnetz-Rufnummern, IN-Nummern, Zeit, Dauer des Gesprächs) und der Inhalt des Gesprächs bzw. der Datenverbindung online übermittelt;
(d) anderenfalls muß die Vermittlungsstelle die benötigten Zusatzinformationen beim SCP oder einer anderen geeigneten Datenbank abfragen, bevor die Konferenzschaltung aufgebaut werden kann.

Mit diesem erfindungsgemäßen Vorgehen kann der Datentransfer zwischen dem SSP und dem SCP auf ein Minimum reduziert werden.

Vorteilhafte Ausgestaltungen und Weiterbildungen sind in den Unteransprüchen angegeben.

Die für die Überwachungsaktionen notwendigen Zusatzinformationen können sowohl im SCP gespeichert sein, wobei für die Abfrage eine erweiterte INAP Schnittstelle verwendet wird. Sie kann aber auch in jeder beliebigen anderen Datenbank an zentraler Stelle gespeichert sein, so daß die Vermittlungsstellen über eine Management Schnittstelle auf die Informationen zugreifen können.

Eine weitere vorteilhafte Ausgestaltung der Erfindung sieht vor, daß die Zusatzinformationen in der Vermittlungsstelle auch nach Beendung der Überwachungsaktion gespeichert bleiben. Damit stehen sie zur späteren Wiederverwendung bereit und müssen nicht wieder explizit angefordert werden.

Damit die Speicherkapazität der Vermittlungsstelle nicht überbeansprucht wird, insbesondere durch Zusatzinformationen für bereits beendete Überwachungsaktionen, ist es vorteilhaft, wenn z. B. vom SCP mittels einer Löschanweisung die Vermittlungsstelle angewiesen werden kann, gespeicherte Zusatzinformationen wieder zu löschen.

In einer erweiterten Ausführungsform speichert wiederum der SCP oder eine andere geeignete Datenbank, zu welchem Zeitpunkt welcher Vermittlungsstelle Zusatzinformationen geschickt wurden. Dabei kann auch ein zyklisches Löschen erfolgen, also es werden diejenigen Vermittlungsstellen zum Löschen aufgefordert, die die Zusatzinformationen vor einer maximalen (oder der längsten) Zeit zugesendet bekommen haben. Durch das Löschen wird verhindert, daß für die Vermittlungsstelle unwichtige, da nicht mehr aktuelle Überwachungsinformationen Speicherplatz blockieren.

Auch die ermittelten Abhördaten (also die zwischen den Kommunikationsteilnehmern entstehende Kommunikation) kann alternativ, anstatt direkt an den oder die Bedarfsträger gesendet zu werden, an eine Einrichtung gesendet werden, der die erforderlichen Zusatzinformationen bekannt sind, und die von sich aus die entsprechenden Bedarfsträger informiert. Diese Einrichtung kann eine andere Vermittlungsstelle sein, oder auch eine spezialisierte Abhöreinrichtung.

Im folgenden wird die Erfindung anhand von Ausführungsbeispielen erläutert. Dabei zeigen
- Figur 1: die prinzipielle Architektur mit überwachtem IN-Teilnehmer und
- Figur 2: die Auswahllogik im SSP.

Einschränkungen in den Figuren und Ausführungsbeispielen sind für die Erfindung nicht zwingend.

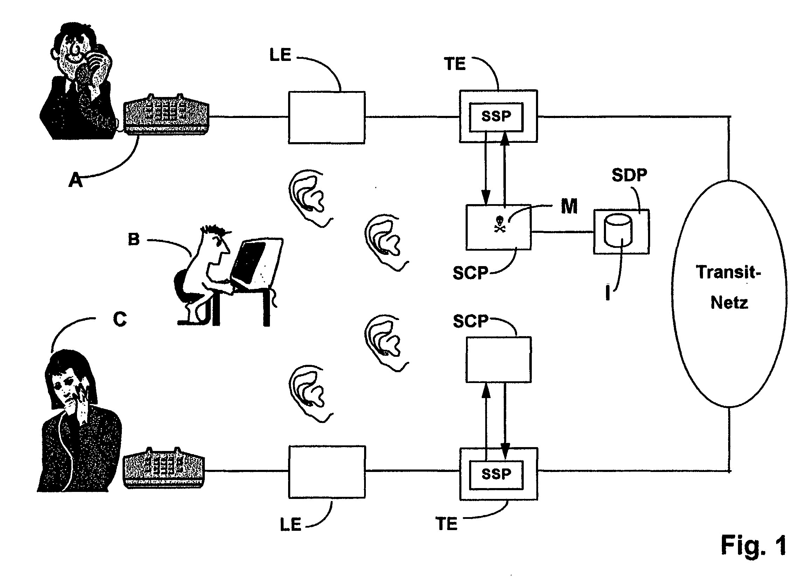

Im folgenden wird das Ablaufprotokoll für das in Figur 1 dargestellten Beispielen beschrieben.

Beispiel 1: Der zu überwachende Teilnehmer A ist IN-Teilnehmer und ruft einen Kommunikationspartner C an.
1. Auf Anordnung des Bedarfsträgers B wird im SCP die IN-Nummer A als zu Überwachen gekennzeichnet M (einmaliger Vorgang).
2. A macht einen Outgoing UPT Call und wählt die Rufnummer von C. Der Anruf wird vermittelt (über LE) und landet schließlich bei einer Vermittlungsstelle TE mit Service Switching Point SSP.
3. Der SSP in der Vermittlungsstelle TE übermittelt die IN-Nummer von A an den zuständigen Service Control Point SCP.
4. Die Service Data Function (SDF) im SCP überprüft die zur übermittelten IN-Nummer gehörenden Daten, unter anderem:
   - Vergebührungsinformation;
   - Kennzeichnung, daß der Teilnehmer zu überwachen ist;
   - Identität des überwachenden Bedarfsträgers.
5. Der SCP sendet ein eindeutiges Identifizierungskennzeichen an den SSP in der Vermittlungsstelle TE.
6. Ist der Vermittlungsstelle SSP dieses Identifizierungskennzeichen bereits bekannt, so sind auch die für die Überwachung notwendigen Daten beim SSP bekannt und eine eine Verbindung (Konferenzschaltung) sowohl zu C als auch zum Bedarfsträger B wird hergestellt.
7. Sind die Daten dagegen nicht bekannt, fragt der SSP mit Hilfe des Identifizierungskennzeichens nach, z. B. bei einer zentralen Stelle wie einem Service Data Point SDP oder beim SCP. Erst nach Übertragung der Daten I kann eine Konferenzschaltung eingerichtet werden. Eventuell vorher anfallende Überwachungsdaten können zwischengespeichert werden.
8. Die geforderten Daten (z. B. Festnetz-Rufnummern und IN-Nummer, Zeit und Dauer der Verbindung) und das laufende Telefongespräch (bzw. die Datenübertragung) werden an den Bedarfsträger übertragen, unmerkbar für A und C.

Beispiel 2: Der zu überwachende Teilnehmer A ist IN-Teilnehmer und wird von seinem Kommunikationspartner C angerufen.
1. Auf Anordnung des Bedarfsträgers B wird im SCP die IN-Nummer von A als zu Überwachen gekennzeichnet M (einmaliger Vorgang).
2. C wählt die IN-Nummer von A.
3. Der Service Switching Point SSP übermittelt die IN-Nummer an den zuständigen Service Control Point SCP.
4. Die Service Data Function (SDF) im SCP überprüft die zur übermittelten IN-Nummer gehörenden Daten, unter anderem:
   - Festnetz-Rufnummer;
   - Kennzeichnung, daß der Teilnehmer zu überwachen ist;
   - Identität des überwachenden Bedarfsträgers.
5. Der SCP sendet das Identifikationskennzeichen an den SSP in der Vermittlungsstelle TE. Das weitere Vorgehen ist entsprechend Punkt 6 und 7 in Beispiel 1.
6. Die Vermittlungsstelle stellt aufgrund dieser Daten eine Konferenzschaltung sowohl zu A als auch zum Bedarfsträger B her.
7. Die geforderten Daten (z. B. Festnetz-Rufnummern, Zeit und Dauer der Verbindung) und das laufende Telefongespräch (bzw. die Datenübertragung) werden von der Vermittlungsstelle TE an den Bedarfsträger B übertragen, unmerkbar für A und C.

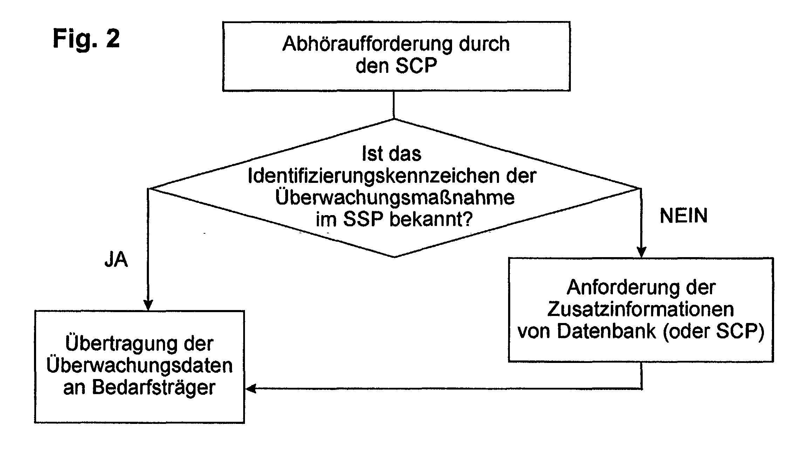

In Figur 2 ist die Auswahllogik dargestellt, nach der der SSP entscheidet, wie er sich nach Erhalt einer Abhöraufforderung verhalten soll.
Der SSP überprüft das erhaltene Identifizierungskennzeichen in einer ihm zur Verfügung stehenden Datenbank. Ist das Kennzeichen dort nicht bekannt, so muß die für die Überwachung notwendige Zusatzinformation noch angefordert werden. Falls es durch die Abfrage der Zusatzinformation zu Verzögerungen kommen sollte, kann die abzuhörende Information zwischengespeichert werden.

### Abkürzungsverzeichnis

- A: Überwachter Teilnehmer
- B: Bedarfsträger
- C: Kommunikationspartner
- IN: Intelligentes Netz
- INAP: Intelligent Network Application Part
- LE: Local Exchange (Ortsvermittlung)
- M: Markierung
- SCP: Service Control Point
- SDF: Service Data Function
- SDP: Service Data Point
- SS7: Zentralkanalsignalisierungssystem Nr. 7
- SSP: Service Switching Point
- TE: Transit Exchange (Transitvermittlung)

## Patentansprüche

1. Verfahren zum Abhören eines Teilnehmers (A) eines Intelligenten Netzes, mit folgenden Merkmalen:
a) eine Kennzeichnung des Teilnehmers (A), dass er zu überwachen ist, wird in einer zentralen Datenbasis (SDP) **gekennzeichnet**, wobei diese Kennzeichnung eine Angabe enthält über mindestens einen dritten Kommunikationsteilnehmer (B), der zum Abhören einer Kommunikationsverbindung mit diesem zu überwachenden Teilnehmer (A) berechtigt ist;
b) der zu überwachender Teilnehmer (A) wird von einem zweiten Kommunikationsteilnehmer (C) angerufen oder der zu überwachende Teilnehmer ruft einen zweiten Kommunikationsteilnehmer (C) an, was zur Initiierung einer Verbindung von einer Vermittlungsstelle (TE) zu einer zentralen Steuerung (SCP) führt
c) die Vermittlungsstelle (TE) wird von der zentralen Steuerung (SCP) über die Überwachungsmaßnahme durch die Übertragung eines eindeutigen Identifizierungskennzeichens informiert, das auf für die Überwachung erforderliche Zusatzinformationen verweist,
d) von der Vermittlungsstelle (TE), wird eine Konferenzschaltung des zu überwachenden Teilnehmers (A) und des anrufenden bzw. angerufenen weiteren Kommunikationsteilnehmers mit dem mindestens einem zum Abhören berechtigten Kommunikationsteilnehmer (B) aufgebaut; und
e) es werden über den zu überwachenden Teilnehmer (A) charakteristische Teilnehmerdaten an den mindestens einen zum Abhören berechtigten dritten Kommunikationsteilnehmer (B) übermittelt.

2. Verfahren nach Patentanspruch 1,
**dadurch gekennzeichnet, dass**
die für die Überwachung erforderlichen Zusatzinformationen an einer zentralen Stelle (SCP) gespeichert sind.

3. Verfahren nach einem der vorigen Patentansprüche,
**dadurch gekennzeichnet, dass**
das eindeutige Identifizierungskennzeichen bei der Vermittlungsstelle (TE) nicht bekannt ist, und die Vermittlungsstelle nach Erhalt des Identifizierungskennzeichen die erforderlichen Zusatzinformationen anfordert.

4. Verfahren nach einem der vorigen Patentansprüche,
**dadurch gekennzeichnet, dass**
die Zusatzinformationen in der Vermittlungsstelle (TE) gespeichert werden.

5. Verfahren nach Patentanspruch 4,
**dadurch gekennzeichnet, dass**
die Zusatzinformation nach Ende des Überwachungszeitraumes gelöscht werden.

6. Verfahren nach Patentanspruch 4,
**dadurch gekennzeichnet, dass**
die Zusatzinformationen bei Empfang eines Löschauftrages gelöscht werden.

7. Verfahren nach Patentanspruch 4,
**dadurch gekennzeichnet, dass**
die Adressen von Vermittlungsstellen, welche die Zusatzinformationen gespeichert haben, an einer zentralen Stelle gespeichert werden.

8. Verfahren nach Patentanspruch 7,
**dadurch gekennzeichnet, dass**
Löschaufträge an diejenigen Vermittlungsstellen geschickt werden, welche die Zusatzinformationen am längsten gespeichert haben.

## Claims

1. Method for monitoring a subscriber (A) in an intelligent network, with the following features:
a) a flag for the subscriber (A) indicating that said subscriber is to be monitored in a central database (SDP) is flagged, with said flag containing details of at least one third communication subscriber (B), which is authorised to monitor a communication connection with this subscriber to be monitored (A);
b) the subscriber to be monitored (A) is called by a second communication subscriber (C) or the subscriber to be monitored calls a second communication subscriber (C), which results in the initiation of a connection from a switching centre (TE) to a central control point (SCP);
c) the switching centre (TE) is informed by the central control point (SCP) about the monitoring measure by the transmission of a unique identifier, which refers to additional information required for the monitoring operation;
d) a conference circuit (TE) comprising the subscriber to be monitored (A) and the calling or called further communication subscriber with the at least one communication subscriber authorised to carry out the monitoring operation (B) is set up by the switching centre (TE); and
e) characteristic subscriber data about the subscriber to be monitored (A) is transmitted to the at least one third communication subscriber authorised to carry out the monitoring operation (B).

2. Method according to Claim 1,
**characterised in that** the additional information required for the monitoring operation is stored at a central point (SCP).

3. Method according to one of the preceding Claims,
**characterised in that** the unique identifier is not known to the switching centre (TE) and on receipt of the identifier the switching centre requests the required additional information.

4. Method according to one of the preceding Claims,
**characterised in that** the additional information is stored in the switching centre (TE).

5. Method according to Claim 4,
**characterised in that** the additional information is deleted after the end of the monitoring period.

6. Method according to Claim 4,
**characterised in that** the additional information is deleted on receipt of a deletion order.

7. Method according to Claim 4,
**characterised in that** the addresses of switching centres that have stored the additional information are stored at a central point.

8. Method according to Claim 7,
**characterised in that** deletion orders are sent to those switching centres that have stored the additional information longest.

## Revendications

1. Procédé d'écoute d'un abonné (A) d'un réseau intelligent, lequel procédé présente les caractéristiques suivantes :
a) une caractérisation de l'abonné (A) qui indique qu'il doit être surveillé est **caractérisée** dans une base de données centrale (SDP), cette caractérisation contenant une indication sur au moins un troisième abonné à la communication (B) qui est autorisé à écouter une liaison de communication avec cet abonné (A) à surveiller,
b) l'abonné (A) à surveiller est appelé par un deuxième abonné à la communication (C) ou l'abonné à surveiller appelle un deuxième abonné à la communication (C), ce qui entraîne l'initialisation d'une liaison entre un central téléphonique (TE) et une commande centrale (SCP),
c) le central téléphonique (TE) est informé par la commande centrale (SCP) sur les mesures de surveillance par la transmission d'une caractéristique d'identification univoque qui renvoie aux informations supplémentaires nécessaires pour la surveillance,
d) une liaison de conférence entre l'abonné à surveiller (A) et l'autre abonné à la communication qui appelle resp. est appelé avec l'au moins un abonné à la communication (B) autorisé à écouter est établie par le central téléphonique (TE) et
e) des données caractéristiques de l'abonné (A) à surveiller sont transmises à l'au moins un troisième abonné à la communication (B) autorisé à écouter.

2. Procédé selon la revendication 1, **caractérisé en ce que** les informations supplémentaires nécessaires pour la surveillance sont conservées en mémoire en un point central (SCP).

3. Procédé selon l'une des revendications précédentes, **caractérisé en ce que** la caractéristique d'identification univoque n'est pas connue par le central téléphonique (TE) et le central téléphonique demande les informations supplémentaires nécessaires après avoir obtenu la caractéristique d'identification.

4. Procédé selon l'une des revendications précédentes, **caractérisé en ce que** les informations supplémentaires sont conservées en mémoire dans le central téléphonique (TE).

5. Procédé selon la revendication 4, **caractérisé en ce que** les informations supplémentaires sont effacées après la fin de la période de surveillance.

6. Procédé selon la revendication 4, **caractérisé en ce que** les informations supplémentaires sont effacées à la réception d'un ordre d'effacement.

7. Procédé selon la revendication 4, **caractérisé en ce que** les adresses des centraux qui ont conservé en mémoire les informations supplémentaires sont conservées en mémoire en un emplacement central.

8. Procédé selon la revendication 7, **caractérisé en ce que** les ordres d'effacement sont transmis aux centraux téléphoniques qui ont conservé le plus longtemps les informations supplémentaires.
